# DEMANDE DE BREVET EUROPEEN

(11) **EP 3 168 645 A1**
(43) Date de publication de la demande: **17.05.2017**
(21) Numéro de dépôt: 16197791.3
(22) Date de dépôt: 08.11.2016
(51) Int. Cl.: G01S 19/05, G01S 19/25, G01S 19/14

(54) **CHARGEMENT DE DONNÉES D'ÉPHÉMÉRIDES DANS UN DRONE**

(30) Priorité: 13.11.2015 FR 1560859
(71) Demandeur: Parrot Drones, 75010 Paris (FR)
(72) Inventeur: MULLER, François, 77500 CHELLES (FR)
(74) Mandataire: Dupuis-Latour, Dominique

(57) **Abrégé**

L'invention concerne un procédé, mis en oeuvre dans un dispositif de pilotage (16) d'un drone, de chargement de données d'éphémérides de satellites, le drone (10) comprenant un module de géolocalisation, le procédé comprenant une étape d'établissement d'une communication entre le dispositif de pilotage (16) et le drone (10) selon un mode de communication donné. Le procédé comprend en outre les étapes suivantes mises en oeuvre dans le dispositif de pilotage : chargement de données d'éphémérides (E26) à partir d'un serveur distant (32) connecté à un réseau de communication (30), et envoi des données d'éphémérides chargées (E25) audit drone. L'invention a également pour objet un procédé de chargement de données d'éphémérides de satellites, mis en oeuvre dans un drone, pour la mise à jour de données d'éphémérides d'un module de géolocalisation.

## Description

L'invention concerne les engins volants motorisés tels que les drones, notamment les drones à voilure tournante de type quadricoptère ou des drones de type aile volante.

*L'AR.Drone 2.0* ou le *Bebop Drone* de Parrot SA, Paris, France sont des drones à voilure tournante de type quadricoptère et l'eBee de SenseFly SA, Suisse est un drone de type aile volante. Ils sont équipés d'une série de capteurs (accéléromètres, gyromètres 3 axes, altimètre) et peuvent comprendre au moins une caméra. Ces drones sont pourvus de plusieurs rotors entraînés par des moteurs respectifs aptes à être commandés de manière différenciée afin de piloter le drone en attitude et en vitesse. Ces drones peuvent comprendre une caméra vidéo frontale captant une image de la scène vers laquelle est dirigé le drone.

La caméra vidéo frontale est utilisable pour un pilotage "en mode immer-sif' du drone, c'est-à-dire où l'opérateur se sert de l'image de la caméra de la même façon que s'il se trouvait lui-même à bord du drone. Elle peut également servir à capter des séquences d'images d'une scène vers laquelle se dirige le drone, l'opérateur se servant du drone de la même façon que d'une caméra qui, au lieu d'être tenue à la main, serait portée par le drone. Les images recueillies peuvent être enregistrées, mises en ligne sur des sites web, envoyées à d'autres internautes, partagées sur des réseaux sociaux, etc.

Les WO 2010/061099 A2, EP 2 364 757 A1 et EP 2 450 862 A1 (Parrot) décrivent le principe de pilotage d'un drone par l'intermédiaire d'un téléphone ou tablette multimédia à écran tactile et accéléromètres intégrés, par exemple un *smartphone* de type *iPhone* ou une tablette de type *iPad* (marques déposées).

Dans la suite de la description, on utilisera de façon générale le terme de "tablette" pour désigner cet appareil, mais ce terme ne doit pas être entendu dans son acception étroite ; bien au contraire, elle englobe également les dispositifs fonctionnellement équivalents, notamment tous les dispositifs portables munis au moins d'un écran de visualisation et de moyens d'échange de données sans fil, tels que *smartphone,* etc.

La tablette incorpore les divers organes de contrôle nécessaires à la détection des commandes de pilotage et à l'échange bidirectionnel de données via une liaison radio de type réseau local sans fil Wi-Fi (IEEE 802.11) ou Bluetooth directement établie avec le drone. Son écran tactile affiche l'image captée par la caméra frontale du drone, avec en superposition un certain nombre de symboles permettant le contrôle du vol et l'activation de commandes par simple contact du doigt de l'opérateur sur cet écran tactile.

La liaison radio sans fil bidirectionnelle comprend une liaison montante (de la tablette vers le drone) et une liaison descendante (du drone vers la tablette) pour transmettre des trames de données contenant :
- (de la tablette vers le drone) les commandes de pilotage, ci-après simplement désignées "commandes", envoyées à intervalles réguliers et de façon systématique ;
- (du drone vers la tablette) le flux vidéo issu de la caméra ; et
- (du drone vers la tablette) en tant que de besoin, des données de vol établies par le drone ou des indicateurs d'état tels que : niveau des batteries, phase de vol (décollage, stabilisation automatique, posé au sol, etc.), altitude, défaut détecté, etc.

Pour permettre une telle communication, le drone comprend un moyen de communication relié à une antenne de sorte à permettre une communication avec le dispositif de pilotage.

L'antenne est par exemple une antenne Wi-Fi.

Le drone comprend également un module de géolocalisation.

Au démarrage du drone, afin que celui-ci soit apte à déterminer sa localisation, il va recevoir des éphémérides permettant de calculer la position des satellites puis ensuite être apte à déterminer sa localisation.

Le module de géolocalisation pour fonctionner à besoin d'obtenir l'éphéméride d'au moins quatre satellites.

Concernant les satellites de type GPS, chaque satellite transmet une trame comprenant cinq sous-trames de six secondes chacune dont les trois premières sous-trames contiennent les éphémérides du satellite. Les éphémérides contiennent les paramètres orbitaux détaillés des satellites. Les données d'éphémérides sont régulièrement réactualisées. Par exemple, les données d'éphémérides changent toutes les deux heures pour les satellites du système GPS et toutes les 30 minutes pour les satellites du système Glonass.

Le calcul de la position du module de géolocalisation et donc du drone, est effectué à partir des données numériques des éphémérides reçus.

La performance d'acquisition des éphémérides du module de géolocalisation lors de sa mise sous tension est déterminée en grande partie par les satellites en visibilité.

Ainsi, le module de géolocalisation peut recevoir les éphémérides de façon efficace si la réception est correcte durant les trois messages de chaque satellite.

Toutefois, si la réception est mauvaise ou en discontinuité, notamment lorsqu'il y a une interruption durant la réception, alors le module de géolocalisation doit de nouveau attendre 30 secondes afin de recevoir la nouvelle trame complète des données d'éphémérides.

Lors de la mise en route d'un drone, le délai d'obtention des données d'éphémérides peut être relativement long, notamment au regard d'un utilisateur. De plus, étant donné que l'autonomie d'un drone est relativement limitée, l'utilisateur est pénalisé d'attendre la bonne réception des données d'éphémérides, notamment en cas de mauvais chargement dans quel cas, le module de géolocalisation du drone doit attendre la trame suivante pour obtenir de nouveau les données d'éphémérides. Ce délai d'attente est consommateur d'énergie et réduit d'autant l'autonomie du drone ce qui est peu acceptable pour l'utilisateur.

Le but de l'invention est de remédier à ces divers inconvénients, en proposant un procédé mis en oeuvre dans un dispositif de pilotage d'un drone, de chargement de données d'éphémérides de satellites et un procédé de chargement de données d'éphémérides de satellites, mis en oeuvre dans un drone afin de réduire le délai de récupération des éphémérides et leur chargement dans le module de géolocalisation du drone et donc réduire la consommation du drone pour réaliser cette fonction de mise à jour des données d'éphémérides dans le module de géolocalisation.

A cet effet, l'invention propose un procédé, mis en oeuvre dans un dispositif de pilotage d'un drone, de chargement de données d'éphémérides de satellites, le drone comprenant un module de géolocalisation, le procédé comprenant une étape d'établissement d'une communication entre le dispositif de pilotage et le drone selon un mode de communication donné. De façon caractéristique, le procédé comprend en outre les étapes suivantes mises en oeuvre dans le dispositif de pilotage :
- chargement de données d'éphémérides à partir d'un serveur distant connecté à un réseau de communication, et
- envoi des données d'éphémérides chargées audit drone.

Selon diverses caractéristiques subsidiaires :
- le procédé comprend en outre une étape de réception d'une information envoyée par le drone, relative à l'identification du drone ou d'une information relative au module de géolocalisation, l'étape d'envoi des données d'éphémérides chargées au drone est précédée d'une étape d'adaptation des données d'éphémérides chargées au module de géolocalisation dudit drone.
- l'étape d'adaptation des données d'éphémérides consiste à modifier le format des données d'éphémérides chargées et / ou encapsuler les données d'éphémérides chargées dans un format adapté au module de géolocalisation du drone.
- le procédé comprend en outre une étape de mémorisation des données d'éphémérides chargées dans le dispositif de pilotage.
- les données d'éphémérides comprennent en outre une donnée de validité des données d'éphéméride.
- le procédé comprend en outre une étape de vérification de la validité des données d'éphémérides mémorisées, si les données d'éphémérides ne sont plus valides, alors le procédé exécute de nouveau l'étape de chargement des données d'éphémérides.
- le procédé comprend en outre une étape de vérification de la validité des données d'éphémérides mémorisées, si les données d'éphémérides mémorisées sont valides, alors le procédé envoie les données d'éphémérides mémorisées au drone.

L'invention a également pour objet un procédé de chargement de données d'éphémérides de satellites, mis en oeuvre dans un drone, pour la mise à jour de données d'éphémérides d'un module de géolocalisation, le drone étant commandé par un dispositif de pilotage, le procédé comprenant une étape d'établissement d'une communication entre le dispositif de pilotage et le drone selon un mode de communication donné.

De façon caractéristique, le procédé comprend en outre la réception de données d'éphémérides de satellites envoyées par le dispositif de pilotage et le chargement des données d'éphémérides reçues dans le module de géolocalisation.

Selon un mode de réalisation particulier de l'invention, le procédé comprend une étape d'envoi au dispositif de pilotage, d'une information relative au module de géolocalisation ou une information d'identification dudit drone.

Selon un autre aspect de l'invention, le procédé comprend en outre une étape de mémorisation des données d'éphémérides reçues dans le drone. 0

On va maintenant décrire un exemple de mise en oeuvre de l'invention, en référence aux dessins annexés où les mêmes références désignent d'une figure à l'autre des éléments identiques ou fonctionnellement semblables.
La Figure 1 est une vue d'ensemble montrant le drone et l'appareil de télécommande associé permettant son pilotage à distance.
La Figure 2 illustre un organigramme de chargement de données d'éphémérides de satellites conformément à l'invention, mis en oeuvre dans un dispositif de pilotage.
La Figure 3 illustre un organigramme de chargement de données d'éphémérides de satellites conformément à l'invention, mis en oeuvre dans un drone.

On va maintenant décrire un exemple de mise en oeuvre de l'invention.

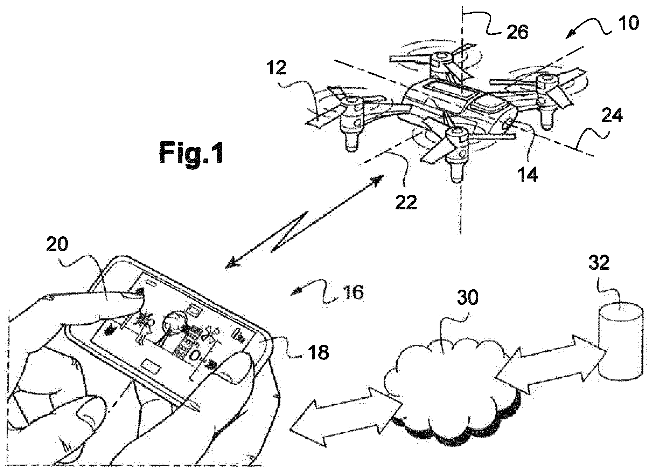

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude.

L'invention s'applique également à un drone de type aile volante tel que l'ebee de SenseFly, SA, Suisse.

Le drone est pourvu d'une caméra 14 à visée frontale permettant d'obtenir une image de la scène vers laquelle est orienté le drone. Le drone comporte également une caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage *ϕ*, roulis *θ* et lacet *ψ*) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone comprend également un module de géolocalisation afin d'être apte à chaque instant de déterminer la position du drone. Cette position est exprimée dans un format donnant la latitude, la longitude et l'altitude. En particulier, le module de géolocalisation détermine la position du drone avant le début du vol et mémorise cette information. Ensuite, en cours de vol, le drone est apte à déterminer sa position à chaque instant et notamment émettre cette information de position à l'utilisateur. Enfin, l'utilisateur peut, notamment par l'envoi d'une commande, demander au drone de revenir à sa position de départ. A partir de la position du drone avant le début du vol mémorisée et de sa position courante, le drone est apte à revenir à sa position d'origine, c'est-à-dire la position avant le début du vol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14 et des paramètres de vol tel que l'altitude, la géolocalisation du drone, etc., et de l'appareil 16 vers le drone 10 pour l'envoi de commandes de pilotage.

Le pilotage du drone consiste à faire évoluer celui-ci par :
a) rotation autour d'un axe de tangage 22, pour le faire avancer ou reculer ;
b) rotation autour d'un axe de roulis 24, pour le décaler vers la droite ou vers la gauche ;
c) rotation autour d'un axe de lacet 26, pour faire pivoter vers la droite ou vers la gauche l'axe principal du drone ; et
d) translation vers le bas ou vers le haut par changement du régime des gaz, de manière à respectivement réduire ou augmenter l'altitude du drone.

Le dispositif de pilotage est également pourvu de moyens de communication aptes à se connecter à un réseau de communication 30 par exemple sur le réseau Internet, en utilisant le réseau 3G, le réseau 4G, ou par une connexion Wifi par exemple, afin de se connecter à un serveur 32 connecté au réseau de communication 30.

Ainsi, le dispositif de pilotage est apte d'une part à communiquer avec le drone et d'autre part à communiquer sur un réseau de communication pour se connecter à un serveur distant.

Des serveurs distants, par exemple, fournissent à tout utilisateur des données d'éphémérides courantes, voire prédites pour plusieurs jours. Notamment, les fournisseurs de modules de géolocalisation proposent un tel service.

Conformément à l'invention, à la mise en route du drone, et après établissement de la communication entre le drone 10 et le dispositif de pilotage 16, ce dernier va charger des données d'éphémérides à partir de données mémorisées sur un serveur distant et envoyer ces données chargées au drone 10.

De la sorte, le dispositif de pilotage 16 utilise le réseau de communication 30 de type internet pour charger les données d'éphémérides, puis le dispositif envoie ces données au drone. Le chargement de données à partir d'un réseau de communication du type Internet étant très performant, le chargement des données d'éphémérides par le dispositif de pilotage est réalisé dans un délai très court.

Le drone obtient ainsi les données d'éphémérides rapidement permettant au drone d'être dans une configuration prête à voler dans un court délai. Le délai d'obtention de ces données par le drone est donc réduit, limitant ainsi la consommation d'énergie du drone. Le chargement des données d'éphémérides conformément à l'invention, a donc un impact favorable sur l'autonomie du drone.

Selon un mode de réalisation particulier, le dispositif de pilotage comprend un espace mémoire de sorte à mémoriser les données d'éphémérides chargées à partir d'un serveur 32 connecté à un réseau de communication 30.

Selon un mode de réalisation alternatif ou complémentaire, le drone comprend un espace mémoire de sorte à mémoriser les données d'éphémérides reçues du dispositif de pilotage.

Selon un mode de réalisation particulier, les données d'éphémérides comprennent en outre une donnée de validité des données d'éphémérides.

Selon un autre mode de réalisation, la donnée de validité des données d'éphémérides est la date de chargement des données d'éphémérides ou la date du fichier contenant les données d'éphémérides, la date du fichier correspondant à la date de chargement du fichier.

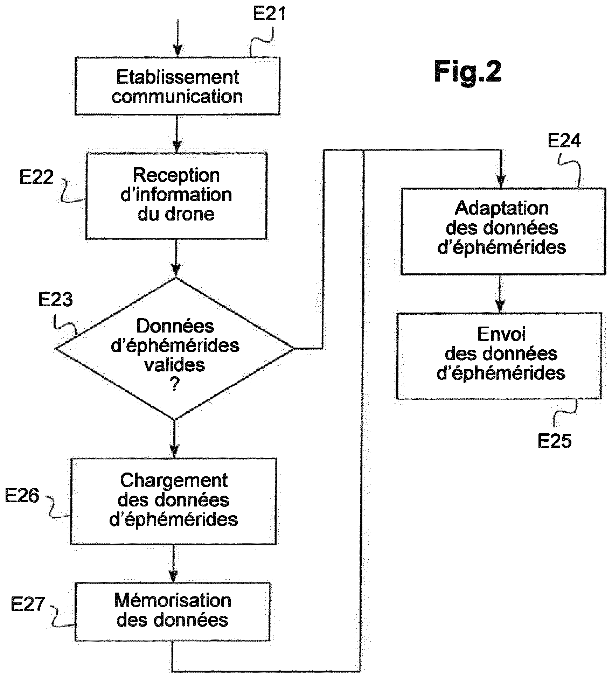

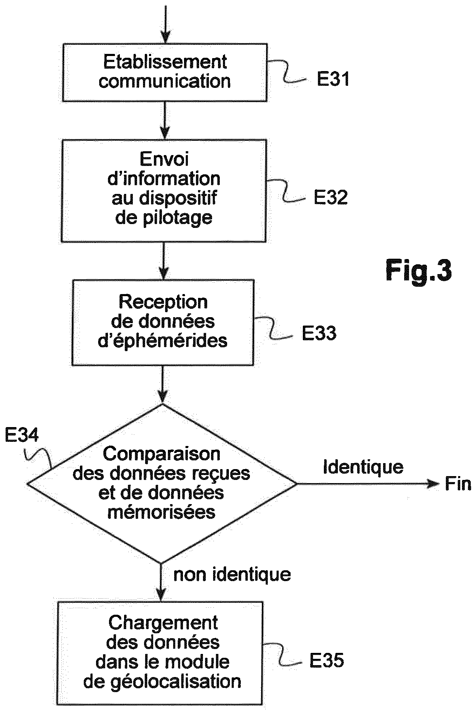

Les Figures 2 et 3 illustrent des organigrammes permettant le chargement de données d'éphémérides de satellites, conformément à l'invention, mis en oeuvre d'une part dans un dispositif de pilotage d'un drone et d'autre part dans le drone pour mettre à jour des données d'éphémérides dans le module de géolocalisation.

La Figure 2 illustre le procédé, mis en oeuvre dans un dispositif de pilotage 16 d'un drone 10, de chargement de données d'éphémérides de satellites.

Le procédé débute par l'étape E21 qui est une étape d'établissement d'une communication entre le dispositif de pilotage 16 et le drone 10 selon un mode de communication donné. Cette étape est notamment réalisée lors du démarrage du drone, en particulier, lors de la mise sous tension du drone.

L'étape E21 est suivie d'une étape E22 de réception d'une information envoyée par le drone 10 relative au drone.

Selon un premier mode de réalisation, cette information est une information d'identification du drone permettant au dispositif de pilotage de connaitre le modèle du drone. A partir du modèle du drone, le dispositif de pilotage est apte à déterminer le module de géolocalisation équipant le drone.

Selon un second mode de réalisation, cette information est une information relative au module de géolocalisation équipant le drone, par exemple le modèle du module de géolocalisation.

L'étape E22 est ensuite suivie d'une étape E23 de vérification de la validité des données d'éphémérides précédemment mémorisées dans le dispositif de pilotage.

La vérification de la validité des données d'éphémérides est fonction d'une donnée de validité attachée aux données d'éphémérides, cette donnée étant par exemple une date.

Selon un mode de réalisation particulier, la vérification de la validité des données d'éphémérides consiste à comparer la date courante, la date incluant par exemple le jour, le mois et l'heure, avec la date de validité mémorisée.

Selon un autre mode de réalisation, les données d'éphémérides sont mémorisées dans un fichier, la vérification de la validité des données d'éphémérides consiste à comparer la date courante avec la date du fichier correspondant à la date du dernier chargement des données d'éphémérides.

Si le nombre de jours entre la date courante et la date du fichier est inférieur à un nombre déterminé alors les données d'éphémérides mémorisées dans le fichier sont considérées comme valides. Dans le cas contraire, les données d'éphémérides sont considérées comme invalides.

Si les données d'éphémérides mémorisées dans le dispositif de pilotage sont valides, alors le procédé se poursuit à l'étape E24.

L'étape E24 est une étape d'adaptation des données d'éphémérides devant être envoyées au drone pour ensuite être chargées dans le module de géolocalisation du drone.

En d'autres termes, au cours de l'étape E24, il est procédé, si nécessaire, à une mise en forme du format des données d'éphémérides à envoyer selon un format adapté et compréhensible par le drone ou par le module de géolocalisation du drone. Cette mise en forme peut être par exemple, une modification du format des données ou une encapsulation de ces données.

L'étape E24 est suivie d'une étape E25 consistant à envoyer les données d'éphémérides au drone.

Selon un mode de réalisation particulier, le dispositif de pilotage envoie le fichier contenant les données d'éphémérides au drone.

A l'étape E23, si les données d'éphémérides ne sont plus valides, alors le procédé se poursuit à l'étape E26 consistant à charger des données d'éphémérides à partir d'un serveur distant 32 connecté à un réseau de communication 30. Ainsi, le dispositif de pilotage 10, via le réseau de communication 30, notamment Internet, va charger les données d'éphémérides à partir d'un serveur distant 32, en utilisant par exemple le protocole de communication 3G, ou 4G ou Wifi.

Après le chargement de ces données, le dispositif de pilotage va mémoriser lors d'une étape E27 les données d'éphémérides dans un espace mémoire du dispositif de pilotage 16.

L'étape E27 est suivie alors des étapes E24 et E25 précédemment décrites, afin d'adapter le format des données d'éphémérides si nécessaire puis d'envoyer les données d'éphémérides au drone.

Selon un mode de réalisation particulier, le procédé exécute un chargement des données d'éphémérides sur un serveur distant à chaque nouvel établissement de communication avec le drone, c'est-à-dire à chaque mise en route du drone. Selon ce mode de réalisation, le dispositif de pilotage ne mémorise pas les données d'éphémérides chargées.

La Figure 3 illustre le procédé de chargement de données d'éphémérides de satellites, conformément à l'invention, mis en oeuvre dans un drone, pour la mise à jour de données d'éphémérides d'un module de géolocalisation dudit drone.

Le procédé débute par une étape E31 d'établissement d'une communication entre le dispositif de pilotage et le drone selon un mode de communication donné.

L'étape E31 est suivie d'une étape d'envoi E32 au dispositif de pilotage, d'une information relative au drone.

Selon un premier mode de réalisation, cette information est une information d'identification du drone permettant au dispositif de pilotage de connaitre le modèle du drone et d'en déduire le module de géolocalisation équipant le drone.

Selon un second mode de réalisation, cette information est une information relative au module de géolocalisation équipant le drone, par exemple le modèle du module de géolocalisation.

Puis l'étape E32 est suivie d'une étape E33 de réception des données d'éphémérides de satellites envoyées par le dispositif de pilotage 16. Selon un mode de réalisation particulier, le drone reçoit un fichier contenant les données d'éphémérides.

L'étape E33 est suivie d'une étape E34 consistant à comparer les données d'éphémérides reçues avec les données mémorisées dans le drone, notamment en comparant le fichier des données d'éphémérides avec le fichier mémorisé dans le drone, par exemple avec une méthode de hachage.

La méthode de hachage permet de calculer une empreinte de chacun des fichiers afin d'identifier respectivement les deux fichiers. Si les empreintes des deux fichiers sont identiques alors les deux fichiers sont identiques. Si au contraire, les empreintes sont différentes, alors les deux fichiers sont différents.

Si l'étape E34 de comparaison permet de déterminer que les deux fichiers sont identiques alors la méthode est terminée, les données d'éphémérides reçues ne sont pas mémorisées dans le drone. Les données d'éphémérides mémorisées dans le drone sont chargées dans le module de géolocalisation.

Si au contraire, à l'étape E34, il est déterminé que les deux fichiers sont différents, alors l'étape E34 est suivie de l'étape E35 de mémorisation des données d'éphémérides reçues dans le drone et de chargement des données d'éphémérides reçues, notamment du fichier reçu, dans le module de géolocalisation.

Le protocole de communication mis en oeuvre entre le dispositif de pilotage et le drone pour l'envoi et la réception des données d'éphémérides peut être un mode de communication synchrone, c'est-à-dire par exemple, un mode de communication basée sur un schéma client-serveur, ou asynchrone, c'est-à-dire un mode de communication basé sur un envoi de message.

## Revendications

1. Procédé, mis en oeuvre dans un dispositif de pilotage (16) d'un drone, de chargement de données d'éphémérides de satellites, le drone (10) comprenant un module de géolocalisation, le procédé comprenant une étape d'établissement d'une communication entre le dispositif de pilotage (16) et le drone (10) selon un mode de communication donné, **caractérisé en ce que** le procédé comprend en outre les étapes suivantes mises en oeuvre dans le dispositif de pilotage :
- chargement de données d'éphémérides (E26) à partir d'un serveur distant (32) connecté à un réseau de communication (30), et
- envoi des données d'éphémérides chargées (E25) audit drone.

2. Procédé de chargement de données d'éphémérides de satellites selon la revendication 1, **caractérisé en ce que** le procédé comprend en outre une étape de réception d'une information envoyée par le drone, relative à l'identification du drone ou d'une information relative au module de géolocalisation, l'étape d'envoi des données d'éphémérides chargées au drone est précédée d'une étape d'adaptation des données d'éphémérides chargées au module de géolocalisation dudit drone.

3. Procédé de chargement de données d'éphémérides de satellites selon la revendication précédente, **caractérisé en ce que** l'étape d'adaptation des données d'éphémérides consiste à modifier le format des données d'éphémérides chargées et / ou encapsuler les données d'éphémérides chargées dans un format adapté au module de géolocalisation du drone.

4. Procédé de chargement de données d'éphémérides de satellites selon l'une quelconque des revendications précédentes, **caractérisé en ce que** le procédé comprend en outre une étape de mémorisation des données d'éphémérides chargées dans le dispositif de pilotage.

5. Procédé de chargement de données d'éphémérides de satellites selon l'une quelconque des revendications précédentes, **caractérisé en ce que** les données d'éphémérides comprennent en outre une donnée de validité des données d'éphéméride.

6. Procédé de chargement de données d'éphémérides de satellites selon les revendications 4 et 5, **caractérisé en ce que** le procédé comprend en outre une étape de vérification de la validité des données d'éphémérides mémorisées, si les données d'éphémérides ne sont plus valides, alors le procédé exécute de nouveau l'étape de chargement des données d'éphémérides.

7. Procédé de chargement de données d'éphémérides de satellites selon les revendications 4 et 5 ou la revendication 6, **caractérisé en ce que** le procédé comprend en outre une étape de vérification de la validité des données d'éphémérides mémorisées, si les données d'éphémérides mémorisées sont valides, alors le procédé envoie les données d'éphémérides mémorisées au drone.

8. Procédé de chargement de données d'éphémérides de satellites, mis en oeuvre dans un drone (10), pour la mise à jour de données d'éphémérides d'un module de géolocalisation, le drone étant commandé par un dispositif de pilotage (16), le procédé comprenant une étape d'établissement d'une communication entre le dispositif de pilotage et le drone selon un mode de communication donné,
**caractérisé en ce que** le procédé comprend en outre la réception de données d'éphémérides de satellites (E33) envoyées par le dispositif de pilotage et le chargement des données d'éphémérides reçues dans le module de géolocalisation.

9. Procédé de chargement de données d'éphémérides de satellites selon la revendication précédente, **caractérisé en ce que** le procédé comprend une étape d'envoi au dispositif de pilotage, d'une information relative au module de géolocalisation ou une information d'identification dudit drone.

10. Procédé de chargement de données d'éphémérides de satellites selon l'une des revendications 8 ou 9, **caractérisé en ce que** le procédé comprend en outre une étape de mémorisation des données d'éphémérides reçues dans le drone.
